# EUROPÄISCHE PATENTANMELDUNG

(11) **EP 1 145 918 A2**
(43) Veröffentlichungstag der Anmeldung: **17.10.2001**
(21) Anmeldenummer: 00119809.2
(22) Anmeldetag: 12.09.2000
(51) Int. Cl.: B60R 21/02

(54) **Sicherheitseinrichtung für Fahrzeuge, inbesondere für Flurförderfahrzeuge**

(30) Priorität: 14.04.2000 DE 10018878; 20.04.2000 DE 10019929
(71) Anmelder: Sauermann, Hans, 85119 Ernsgaden (DE)
(72) Erfinder: Sauermann, Hans, 85119 Ernsgaden (DE)
(74) Vertreter: Glöser, Otto

(57) **Zusammenfassung**

Eine Sicherheitseinrichtung (2) für Fahrzeuge, insbesondere für Flurförderfahrzeuge (1), bei der an mindestens einer Seite neben dem Fahrersitz (3) ein von einer Ruhestellung (6) in eine Sicherungsstellung verschwenkbarer Schutzbügel (4, 5) angeordnet ist, der angetrieben, sensorengesteuert und im Fahrbetrieb automatisch in Sicherungsstellung verschwenkt ist, soll verbessert werden.

Dazu wird vorgesehen, daß der Schutzbügel (4, 5) um eine horizontal quer zur Fahrtrichtung verlaufende Achse (7) verschwenkbar ist, wobei der Schutzbügel (4, 5) in Ruhestellung (6) in etwa vertikal und in Sicherungsstellung in etwa horizontal steht, und daß nach Beendigung des Fahrbetriebs der Schutzbügel (4, 5) automatisch wieder in Ruhestellung (6) verschwenkt ist.

## Beschreibung

Die Erfindung bezieht sich auf eine Sicherheitseinrichtung für Fahrzeuge, insbesondere für Flurförderfahrzeuge, bei der an mindestens einer Seite neben dem Fahrersitz ein von einer Ruhestellung in eine Sicherungsstellung verschwenkbarer Schutzbügel angeordnet ist, der angetrieben, sensorengesteuert und im Fahrbetrieb automatisch in Sicherungsstellung verschwenkt ist.

Bei allen Arten von Fahrzeugen besteht für den Fahrer eine erhebliche Verletzungsgefahr, wenn das Fahrzeug seitlich umkippt. Bei Flurförderfahrzeugen ist das Risiko eines seitlichen Umkippens besonders groß, wenn schwere Lasten bei ausgefahrenem Hubmast bewegt werden, also ein hoher Fahrzeugschwerpunkt vorliegt. Daneben besitzen Flurförderfahrzeuge meist keine seitlichen Wände, so daß ein Sturz auf den Boden bzw. ein Einklemmen des Fahrers unter dem Fahrzeug zu befürchten sind.

Um den Fahrer beim Umkippen auf dem Fahrersitz zu sichern, wurden bereits Bekkengurte vorgesehen, die jedoch nicht verhindern, daß der Fahrer mit dem Kopf oder dem Oberkörper auf dem Boden aufschlagen kann. Daneben wurde vorgeschlagen, den Fahrersitz mit seitlich vorstehenden Wangen zu versehen, die den Fahrer im Fahrersitz fixieren sollen. Zum einen behindern diese den Fahrer beim Ein- und Aussteigen, was beim Betrieb eines Flurförderfahrzeugs häufig vorkommt, und zum anderen vermögen sie auch keinen zuverlässigen Schutz zu gewährleisten.

Darüber hinaus wurden an dem Fahrersitz seitlich angeordnete armlehnenähnliche Schutzbügel vorgeschlagen, die vom Fahrer vor Fahrtantritt per Hand von einer Ruhestellung gegen eine Federkraft in eine Sicherungsstellung verschwenkt werden müssen und zum Ein- und Aussteigen wieder in die Ruhestellung gebracht werden können.

Derartige Schutzbügel stellen zwar in Sicherungsstellung einen Schutz des Fahrers beim Umkippen des Fahrzeugs dar, in der Praxis kommt es jedoch häufig vor, daß der Fahrer das Verschwenken der Schutzbügel in die Sicherungsstellung aus Bequemlichkeit, Nachlässigkeit oder anderen Gründen unterläßt, so daß die Schutzfunktion völlig ausbleibt.

Aus der DE 43 15 824 C2 ist eine andere Sicherheitseinrichtung bekannt, bei der an beiden Seiten neben dem Fahrersitz von einer Ruhestellung in eine Sicherungsstellung verschwenkbare Schutzbügel angeordnet sind, die angetrieben, sensorengesteuert und im Fahrbetrieb automatisch in Sicherungsstellung verschwenkt sind. Die Schutzbügel sind dabei als zwei bogenförmige Schwenkarme ausgeführt, die um annähernd vertikale Achsen schwenkbar gelagert, in Rückhalteposition vor dem Beckenbereich des Fahrers verschwenkt und als Armlehnen ausgebildet sind. Es bestehen daher auch hier die bereits im Zusammenhang mit Beckengurten beschriebenen Gefahren von Kopf- oder Oberkörperverletzungen. Außerdem sind die Schwenkarme nicht an unterschiedliche Körperformen anpaßbar. Am Fahrersitz ist ein Sensor eingebaut, der automatisch für ein Verschwenken der Schwenkarme in die Rückhalteposition sorgt, wenn sich der Fahrer auf dem Sitz niederläßt. Die Zurückstellung der Schwenkarme erfolgt über ein vom Fahrer zu bedienendes Betätigungsorgan. Hier ist also eine Mitwirkung des Fahrers erforderlich, die mit der Gefahr einer unsachgemäßen Bedienung verbunden ist und den Fahrer in seiner eigentlichen Tätigkeit behindert.

Demgegenüber ist es Aufgabe der Erfindung, die bekannte Sicherheitseinrichtung vorteilhaft weiterzubilden.

Gelöst wird diese Aufgabe mit den Merkmalen des kennzeichnenden Teiles des Hauptanspruchs. Das Verschwenken der Schutzbügel erfolgt in einer seitlich neben dem Fahrersitz vertikal und in Fahrtrichtung liegenden Ebene. Der Bereich des Fahrersitzes ist also nicht beeinträchtigt, insbesondere nicht eingeengt, so daß die Sicherheitseinrichtung für unterschiedliche Personen nutzbar und wirksam ist. Die Lage der Schutzbügel in Sicherungsstellung verhindert wirksam ein seitliches Herausfallen des Fahrers und in Ruhestellung besteht keinerlei Behinderung beim Ein- und Aussteigen, was beim Betrieb eines Flurförderfahrzeuges besonders häufig vorkommt. Endet der Fahrbetrieb, so werden die Schutzbügel automatisch wieder in Ruhestellung verschwenkt, so daß für den Fahrer keine zusätzlichen Bedienungsschritte anfallen. Der jeweilige Betriebszustand des Fahrzeugs wird dabei von den Sensoren zuverlässig erkannt und eine optimale Sicherung des Fahrers erreicht. Dadurch wird auch gewährleistet, daß das Fahrzeug vom Fahrer nur verlassen werden kann, wenn sich das Fahrzeug nicht im Fahrbetrieb befindet.

Vorteilhafterweise sind dabei an beiden Seiten neben dem Fahrersitz verschwenkbare Schutzbügel angeordnet, so daß ein beidseitiges Ein- und Aussteigen möglich ist.

Daneben ist es vorteilhaft, für den Antrieb entweder einen üblichen Elektromotor oder einen Hydraulikmotor zu verwenden. Zur Kraftübertragung ist es dann günstig, einen Riemenantrieb vorzusehen, der bei Überschreiten eines Maximalwiderstandes durchrutscht und so die Gefahr eines Einklemmens in dem sich bewegenden Schutzbügel auf einfache Weise verhindert. Daneben könnte der Antrieb auch durch einen Hydraulikzylinder oder einen Pneumatikzylinder erfolgen. Dabei wäre es günstig, in den Zuleitungen einen Druckschalter vorzusehen, der die Schwenkbewegung der Schutzbügel im Falle einer Überlastung, wie sie beispielsweise beim Einklemmen auftritt, unterbricht. Der Antrieb kann aber auch mittels eines Elektro-Hub-Magneten erfolgen.

Vorzugsweise wird die Schwenkbewegung des Schutzbügels durch Endschalter begrenzt, wobei als Endschalter entweder magnetische Näherungssensoren oder Tastschalter vorgesehen werden können.

Die Sensoren zur Steuerung der Schwenkbewegung können in unterschiedlichen Bereichen des Fahrzeugs angebracht sein, die jeweils Rückschlüsse auf den momentanen Betriebszustand des Fahrzeuges und die damit verbundene Notwendigkeit eines Verschwenkens der Schutzbügel in Sicherungsstellung ermöglichen.

Wird ein Steuerungssensor im Fahrtrichtungs-Wählhebel angebracht, so kann die Steuerung der Schutzbügel derart erfolgen, daß die Schutzbügel sich in Ruhestellung befinden, wenn der Fahrtrichtungs-Wählhebel in neutraler Position steht. Bei Auswahl der Vorwärts- und/oder Rückwärts-Fahrtrichtung erfolgt ein automatisches Verschwenken der Schutzbügel in die Sicherungsstellung. Bei einem schnellen Umschalten von Vorwärts- in Rückwärts-Fahrtrichtung verbleiben die Schutzbügel durch eine Verzögerungsschaltung in Sicherungsstellung.

Wird ein Steuerungssensor am Handbremsgestänge angebracht, erfolgt die Steuerung so, daß sich die Schutzbügel bei gelöster Handbremse in Sicherungsstellung befinden und bei angezogener Handbremse in Ruhestellung verschwenkt sind.

Werden Steuerungssensoren am Pedal-Wippen-Gestänge oder am Steuerungs-Joystick angebracht, so erfolgt die Steuerung der Sicherheitseinrichtung wie beim Fahrtrichtungs-Wählhebel so, daß sich die Schutzbügel nur in neutraler Wippen- bzw. Joystick-Position in Ruhestellung befinden und ansonsten in Sicherungsstellung verschwenkt werden.

Werden Steuerungssensoren am Fahrzeugtachometer oder an einem Fahrzeugrad angebracht, so ist eine Steuerung der Schutzbügelposition in Abhängigkeit von der Geschwindigkeit des Fahrzeugs möglich.

Bei am Fahrersitz angebrachten Steuerungssensor erfolgt ein Verschwenken der Schutzbügel in Sicherungsstellung, sobald der Fahrersitz durch das Gewicht des sitzenden Fahrers belastet wird. Verläßt der Fahrer den Sitz, so erfolgt nach kurzer Verzögerungszeit ein Verschwenken der Schutzbügel in Ruhestellung, damit der Fahrer das Fahrzeug verlassen kann.

Durch eine beliebige Kombination der verschiedenen Arten von Steuerungssensoren kann die Sicherheitseinrichtung an alle Bedürfnisse der Praxis angepaßt und betriebssicher ausgestaltet werden.

In einer bevorzugten Ausführungsform der Erfindung sind die verschwenkbaren Schutzbügel an einem hinter dem Fahrersitz vorgesehenen Querträger angeordnet. Dabei kann in dem Querträger eine drehbar gelagerte, angetriebene und mit den Schutzbügeln starr verbundene Welle verlaufen und zusätzliche an dem Querträger eine Kopfstütze angeordnet sein. Möglich ist es, daß der Querträger aus ineinandergreifenden Profilen besteht und längenverstellbar ist. Eine doppelte Lagerung der Welle in dem Querträger ist ebenfalls günstig.

Wird der Querträger in einer vorteilhaften Ausgestaltung über verstellbare Teleskopstangen an dem Fahrzeugdach angebracht, so erhält man eine Sicherheitseinrichtung, die auch in herkömmlichen Fahrzeugen problemlos nachgerüstet werden kann, wobei ein und dieselbe Sicherheitseinrichtung an verschiedene Fahrzeugtypen anpaßbar ist.

Bei einer weiteren Ausgestaltung weisen dann die Teleskopstangen im Bereich der Befestigung an dem Fahrzeugdach eine Schwenkachse auf. Diese kann quer zur Fahrtrichtung verlaufen, so daß die Sicherheitseinrichtung entweder nach vorne oder nach hinten um ca. 90 ° geschwenkt werden kann, um beispielsweise Platz zu schaffen für eine unterhalb der Sicherheitseinrichtung öffnende Motorhaube oder dergleichen. Bei einer anderen vorteilhaften Schwenkmöglichkeit verläuft die Schwenkachse in Fahrtrichtung, so daß die Sicherheitseinrichtung seitlich verschwenkbar ist. Besonders vorteilhaft ist es, die Teleskopstangen mit Sicherungsbolzen zu fixieren.

Bei einer anderen vorteilhaften Ausgestaltung ist der Querträger mit nach unten gerichteten Streben am Fahrzeugchassis befestigt. Die Streben verlaufen im Bereich hinter dem Fahrersitz, so daß weder der seitliche noch der hinter dem Fahrer einsehbare Bereich eingeschränkt ist. Günstig ist es dabei, die Befestigung am Fahrzeugchassis über die Führungsschienen des Fahrzeugsitzes vorzunehmen, da so eine Verstellung der Sicherheitseinrichtung gemeinsam mit dem Fahrersitz erfolgt. Werden die nach unten gerichteten Streben in ihrer Länge verstellbar ausgeführt, kann die Sicherheitseinrichtung in ihrer Höhe an unterschiedliche Körpergrößen des jeweiligen Fahrers angepaßt werden.

Weisen die Schutzbügel im vorderen Bereich eine bauchige Ausformung auf, so ist zum einen auch der vordere Bereich wirksam gegen ein Herausfallen nach schräg vorn gesichert. Daneben verbleibt für den Fahrer im Bereich der Ellbogen ein ausreichender Raum, so daß keine Behinderung beim Lenken auftritt. Durch eine Längenverstellbarkeit der Schutzbügel, beispielsweise durch teleskopartig ineinandergreifende Rohre, ergibt sich dabei eine weitere Anpassungsmöglichkeit.

Besonders wirksamen Schutz, vor allem gegen Kopf- und/oder Oberkörperverletzungen bieten die Schutzbügel, wenn sie in Sicherungsstellung in etwa in Höhe der Oberarme des auf dem Fahrersitz sitzenden Fahrersverlaufen. Natürlich ist es günstig, die Schutzbügel gepolstert auszuführen. Zur Erhöhung der Sicherheitfür den Fahrer wird die Antriebseinheit der Sicherheitseinrichtung in einem Schutzgehäuse untergebracht, das die gesamte Antriebseinheit umgibt und vorteilhafterweise eine Armlehne für den Fahrer bei zum Rückwärtsfahren gedrehtem Oberkörper bildet.

In der Zeichnung ist die Erfindung beispielsweise veranschaulicht. Es zeigen:
- Fig. 1: ein schematisch dargestellte Flurförderfahrzeug mit Sicherheitseinrichtung,
- Fig. 2: einen vergrößerten Ausschnitt der Fig. 1,
- Fig. 3: den Ausschnitt der Fig. 2 in Fahrtrichtung betrachtet
- Fig. 4: eine andere Ausführungsform von der Seite betrachtet,
- Fig. 5: die Ausführungsform der Fig. 4 in Fahrtrichtung betrachtet,
- Fig. 6: die Ausführungsform der Fig. 4 mit nach vorn geschwenkter Sicherheitseinrichtung,
- Fig. 7: eine andere Ausführungsform, teilweise aufgebrochen dargestellt,
- Fig. 8: die Ausführungsform nach Fig. 7 in Fahrtrichtung betrachtet, ebenfalls teilweise aufgebrochen,
- Fig. 9: einen vergrößert dargestellten Schnitt entlang der Linie IX-IX der Fig. 8 mit zusätzlicher Schutzabdeckung und
- Fig. 10: eine schematisch dargestellte Steuerung der Sicherheitseinrichtung.

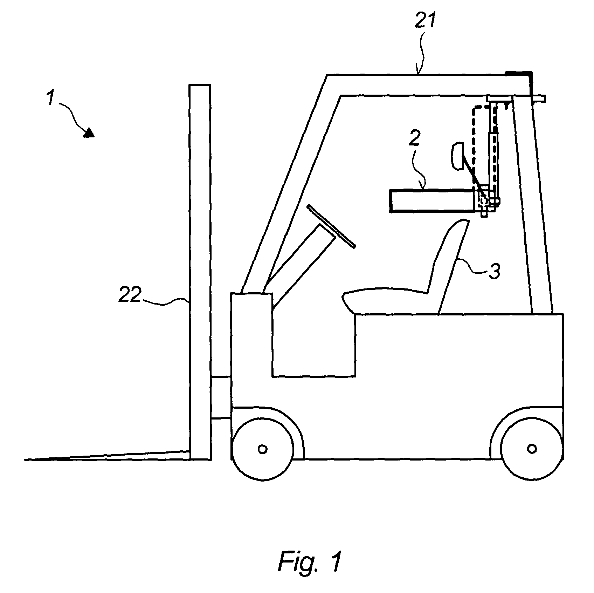

In der Fig. 1 ist ein schematisch gezeichnetes Flurförderfahrzeug 1 mit erfindungsgemäßer Sicherheitseinrichtung 2 dargestellt.

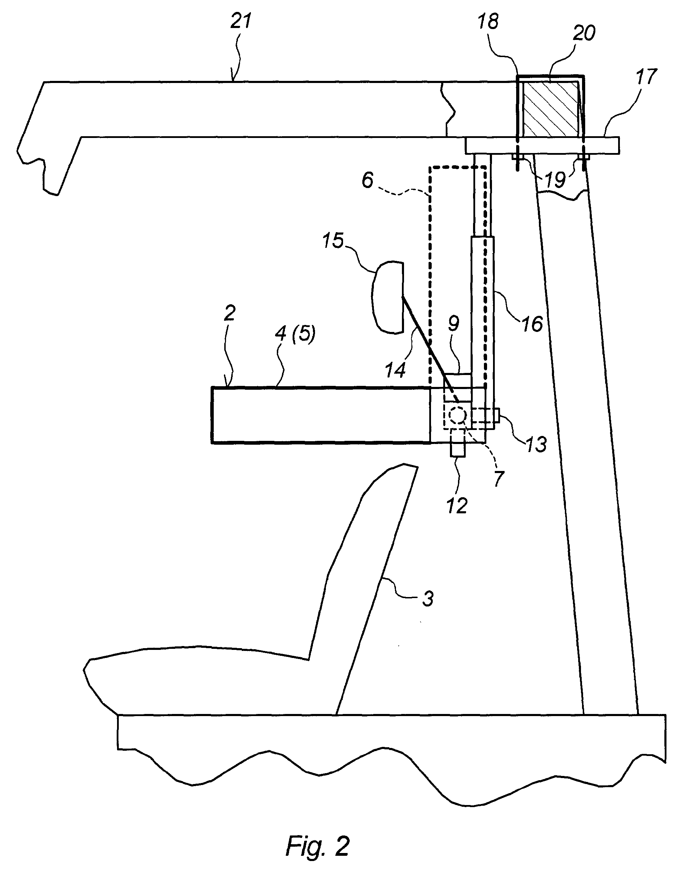

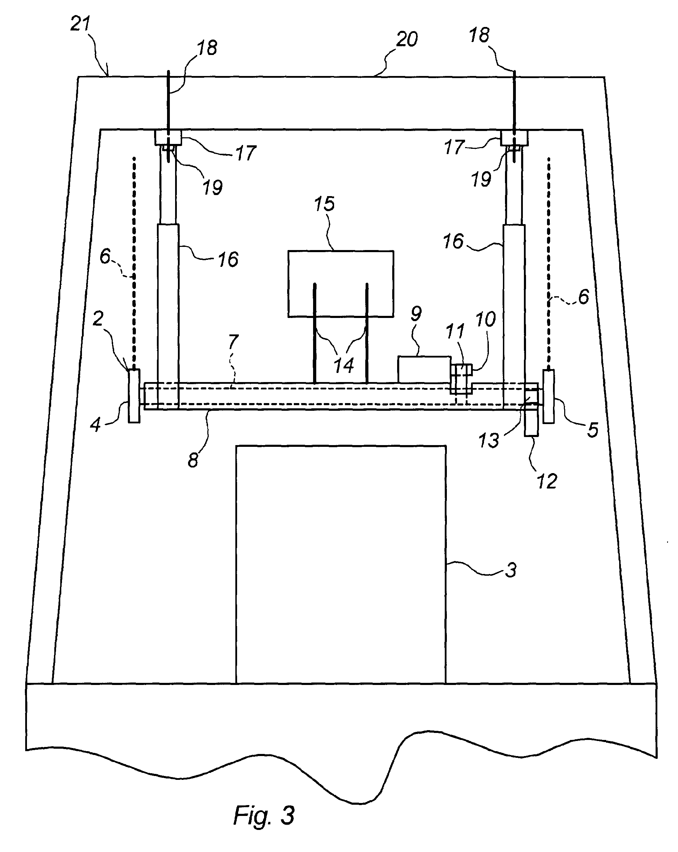

Zur weiteren Erläuterung wird auf die vergrößerten Ausschnitte der Fig. 2 und 3 Bezug genommen. Die Sicherheitseinrichtung 2 besteht aus zwei, neben dem Fahrersitz 3 angeordneten Schutzbügeln 4, 5, die von einer strichliert gezeichneten Ruhestellung 6 in die durchgezogen gezeichnete Schutzstellung verschwenkbar sind. Die Schutzbügel 4, 5 sind mit einer Welle 7 starr verbunden, die in einem Querträger 8 drehbar gelagert ist.

Die Welle 7 wird von einem an dem Querträger 8 angeordneten Elektro- oder Hydraulikmotor 9 angetrieben. Dazu ist zwischen der Ausgangswelle 10 des Motors 9 und der Welle 7 ein Riemenantrieb 11 vorgesehen. Zur Begrenzung der Schwenkbewegung der Schutzbügel 4, 5 sind an dem Querträger 8 Endschalter 12, 13 angeordnet, die den Motor 9 unterbrechen. Es handelt sich dabei um magnetische Näherungssensoren, die beim Erreichen der jeweiligen Endlage ausgelöst werden. Denkbar ist auch die Verwendung einfacher Tastschalter oder dergleichen. Um die Stabilität zu erhöhen, können für die Schutzbügel 4, 5 zusätzliche Stützlager vorgesehen werden, an denen die Schutzbügel 4, 5 in Ruhe- bzw. Sicherungsstellung anliegen und die aus Gründen der Übersichtlichkeit nicht dargestellt sind.

An dem Querträger 8 ist über gegebenenfalls verstellbare Stangen 14 eine Kopfstütze 15 befestigt. Der Querträger könnte für eine Längenverstellbarkeit aus ineinandergreifenden Profilen bestehen, wenn eine Anpassung an unterschiedliche Sitzbreiten oder dergleichen notwendig ist.

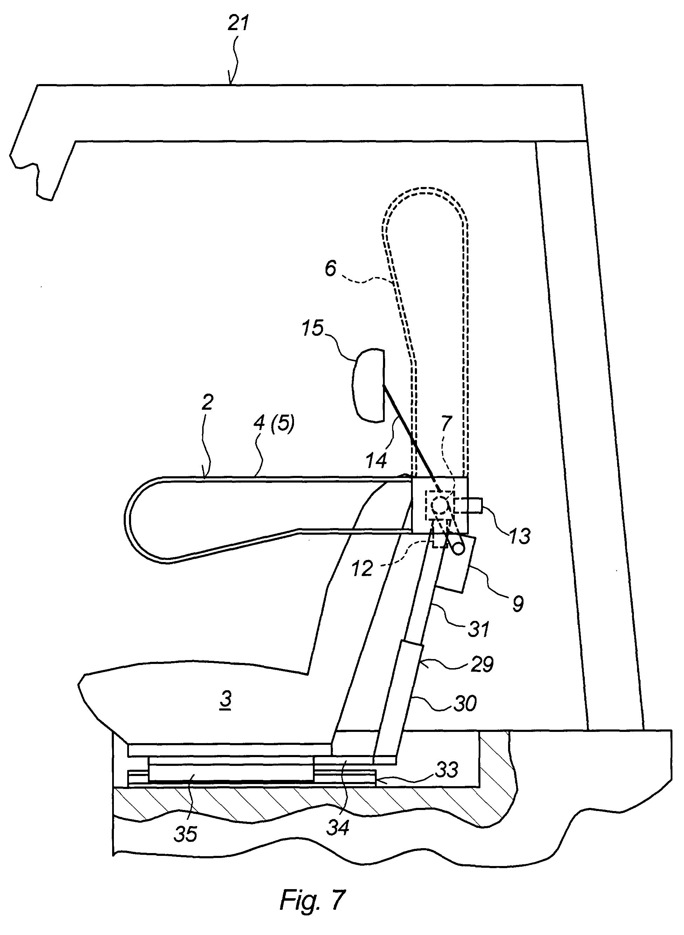

Über verstellbare Teleskopstangen 16, die mit nicht dargestellten Klemmschrauben, Sicherungsstiften oder dergleichen fixiert sind, ist der Querträger mit Halteprofilen 17 verbunden. Die Halteprofile 17 sind wiederum mit Klemmbügeln 18 und Muttern 19 an einem Querholm 20 der Dachkonstruktion 21 des Flurförderfahrzeugs 1 befestigt. Da die Dachkonstruktion 21 aus Sicherheitsgründen ausreichend stabil sein muß, um vor von dem Hubmast herabstürzenden Gegenständen zu schützen, stellt die Befestigung der Sicherheitseinrichtung 2 kein Problem dar. Somit ist es möglich, die Sicherheitseinrichtung 2 auch an beliebigen Flurförderfahrzeugen 1 nachzurüsten, wie dies im Ausführungsbeispiel geschehen ist. Denkbar ist es natürlich auch, die Sicherheitseinrichtung 2 in dem Flurförderfahrzeug 1 von vorn herein vorzusehen. Beispielsweise könnte die Welle 7 der Schutzbügel 4, 5 in der Lehne des Fahrersitzes 3 integriert werden. Der Querträger 8 könnte auch über Stützelemente an dem Chassis des Flurförderfahrzeugs 1 befestigt sein, wie dies in den Fig. 7 bis 9 näher beschrieben ist. Auch die Verwendung einer einzigen Teleskopstange wäre denkbar.

Die Steuerung der Sicherheitseinrichtung 2 erfolgt über in der Zeichnung nicht dargestellte Steuerungssensoren, die in unterschiedlichen Bereichen des Flurförderfahrzeugs 1 angebracht sein können, die jeweils Rückschlüsse auf den momentanen Betriebszustand des Fahrzeuges und die damit verbundene Notwendigkeit eines Verschwenkens der Schutzbügel in Sicherungsstellung ermöglichen.

Bei einer Ausführungsform ist ein Steuerungssensor im Fahrtrichtungs-Wählhebel angebracht. Dann erfolgt die Steuerung der Schutzbügel 4, 5 derart, daß die Schutzbügel 4, 5 sich in Ruhestellung befinden, wenn der Fahrtrichtungs-Wählhebel in neutraler Stellung steht. Bei Auswahl der Vorwärts- und/oder Rückwärts-Fahrtrichtung erfolgt ein automatisches Verschwenken der Schutzbügel in die Sicherungsstellung. Bei einem schnellen Umschalten von Vorwärts- in Rückwärts-Fahrtrichtung verbleiben die Schutzbügel durch eine Verzögerungsschaltung in Sicherungsstellung.

Bei einer anderen Ausführungsform kann ein Steuerungssensor am Handbremsgestänge angebracht sein. Die Steuerung erfolgt dann so, daß sich die Schutzbügel bei gelöster Handbremse in Sicherungsstellung befinden und bei angezogener Handbremse in Ruhestellung verschwenkt werden.

Bei Flurförderfahrzeugen 1 mit Pedalwippen zur Steuerung oder einem Steuerungs-Joystick können Steuerungssensoren am Pedal-Wippen-Gestänge oder am Steuerungs-Joystick angebracht werden. Die Steuerung der Sicherheitseinrichtung 2 erfolgt dann wie beim Fahrtrichtungs-Wählhebel so, daß sich die Schutzbügel nur in neutraler Wippen- bzw. Joystick-Position in Ruhestellung befinden und ansonsten in Sicherungsstellung verschwenkt werden.

Daneben bzw. alternativ können Steuerungssensoren am Fahrzeugtachometer oder an einem Fahrzeugrad angebracht sein, so daß eine Steuerung der Position der Schutzbügel 4, 5 in Abhängigkeit von der Geschwindigkeit des Flurförderfahrzeugs 1 möglich ist.

Auch am Fahrersitz 3 können Steuerungssensoren angebracht sein, so daß ein Verschwenken der Schutzbügel 4, 5 in Sicherungsstellung erfolgt, sobald der Fahrersitz 3 durch das Gewicht des sitzenden Fahrers belastet wird. Verläßt der Fahrer den Sitz 3, so werden die Schutzbügel 4, 5 nach kurzer Verzögerungszeit in Ruhestellung verschwenkt, damit der Fahrer das Flurförderfahrzeug 1 verlassen kann.

Denkbar ist auch eine beliebige Kombination verschiedener Arten von Steuerungssensoren, um die Sicherheitseinrichtung 2 an die Bedürfnisse der Praxis anzupassen und betriebssicher auszugestalten. Eine solche Kombination verschiedener Steuerungssensoren ist jeodch nicht zwingend, d.h. auch mit einer der erwähnten Steuerungsarten ist ein zuverlässiger Betrieb gewährleistet.

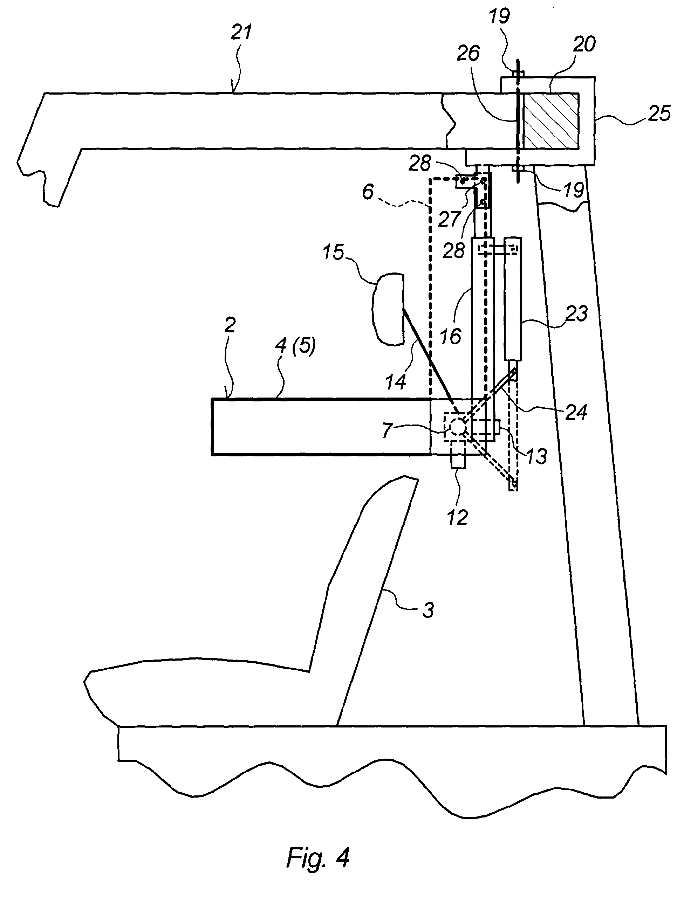

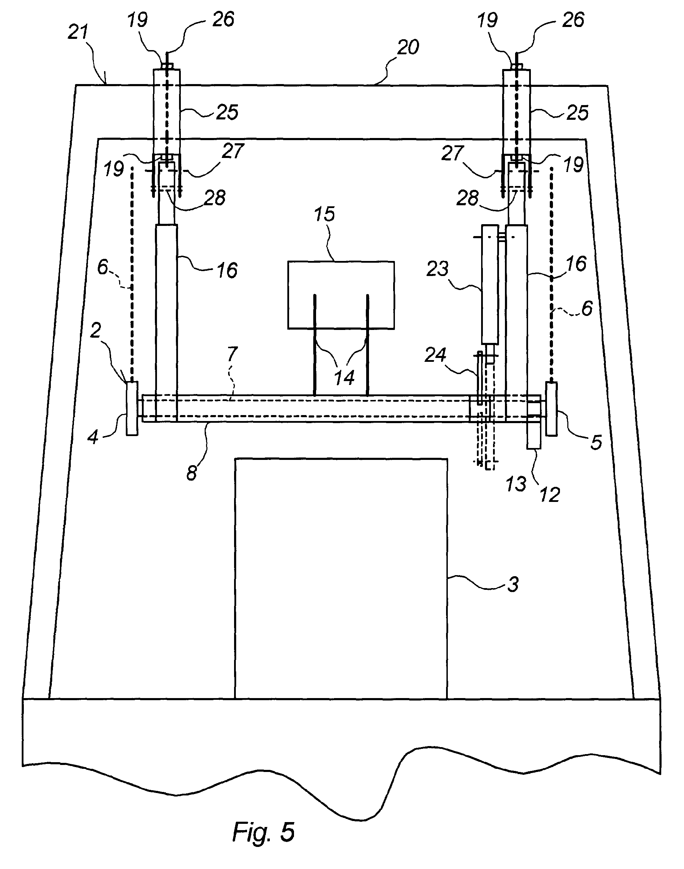

Eine andere Ausführungsform der Sicherheitseinrichtung 2 wird anhand der Fig. 4 bis 6 beschrieben, wobei identische Teile mit gleichen Bezugszeichen versehen sind und wiederum die Ruhestellung 6 der Schutzbügel strichliert eingezeichnet ist.

Die Welle 7 wird hier von einem Hydraulik- oder Pneumatikzylinder 23 angetrieben, der einerseits mit einer Teleskopstange 16 und andererseits mit einem mit der Welle 7 starr verbundenen Ansatz 24 drehbar verbunden ist. Durch Einfahren des Zylinders 23 erfolgt somit ein Verschwenken der Schutzbügel 4, 5 in die Sicherungsstellung und durch Herausfahren des Zylinders 23 ein Verschwenken in die Ruhestellung 6. In der Zuleitung des Zylinders 23 ist ein nicht dargestellter Druckschalter vorgesehen, der die Schwenkbewegung bei einer Überlastung unterbricht, um so ein Einklemmen in den sich bewegenden Schutzbügeln 4, 5 zu verhindern.

Die Befestigung an dem Querholm 20 des Fahrzeugdachs 21 erfolgt hier über U-förmige Halteprofile 25, die beispielsweise mit einem Langbolzen 26 und Muttern 19 um den Querholm 20 verspannt sind. Die Teleskopstangen 16 sind im Bereich der Befestigung an dem Fahrzeugdach 21 um eine quer zur Fahrtrichtung verlaufende Achse 27 schwenkbar, so daß die Sicherheitseinrichtung am 90 ° nach vorne oder nach hinten geschwenkt werden kann. Die Lage der Teleskopstangen 16 ist dabei mit nicht dargestellten Sicherungsbolzen in Bohrungen 28 fixierbar.

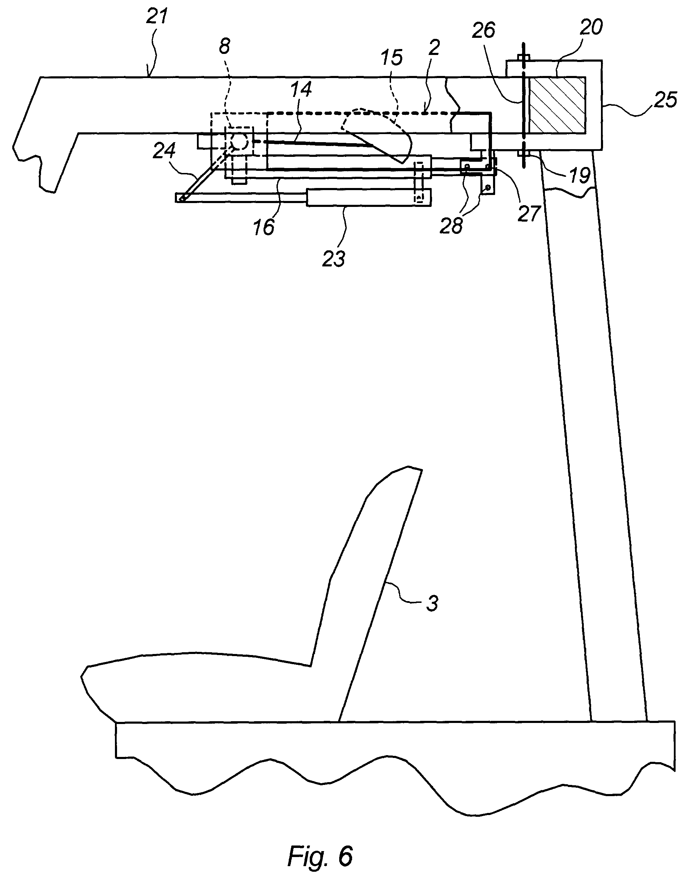

Wie sich besonders deutlich aus der Fig. 6 ergibt, erhält man durch Verschwenken der gesamten Sicherheitseinrichtung 2 nach vorn oder gegebenenfalls auch nach hinten ausreichend Platz, um eine unterhalb der Sicherheitseinrichtung 2 öffnende Motorhaube oder dergleichen problemlos öffnen zu können. Dabei kann auch die an dem Querträger 8 über Stangen 14 angebrachte Kopfstütze 15 verschwenkbar ausgestaltet sein. Statt der Fixierung der Teleskopstangen 16 über Sicherungsbolzen in Bohrungen 28 könnte auch eine Gasdruckfeder oder dergleichen vorgesehen sein.

Statt dem Hydraulik- oder Pneumatikzylinder 23 könnte auch ein Elektro-Hub-Magnet zum Einsatz kommen, ohne daß sich der Aufbau der Sicherheitseinrichtung 2 entscheidend verändert.

Wird eine seitliche Schwenkmöglichkeit für die gesamte Sicherheitseinrichtung 2 gewünscht, so wird eine der beiden Teleskopstangen 16 um eine in Fahrtrichtung verlaufende Schwenkachse drehbar mit der Befestigung am Fahrzeugdach verbunden, wogegen die andere Teleskopstange 16 eine lösbare Verbindung mit der Befestigung am Fahrzeugdach, beispielsweise durch herausnehmbare Bolzen oder dergleichen aufweist.

Die Steuerung der Sicherheitseinrichtung 2 erfolgt wiederum wie zu den Fig. 2 und 3 beschrieben, so daß die Schutzbügel 4, 5 sich im Fahrbetrieb automatisch in Sicherungsstellung befinden.

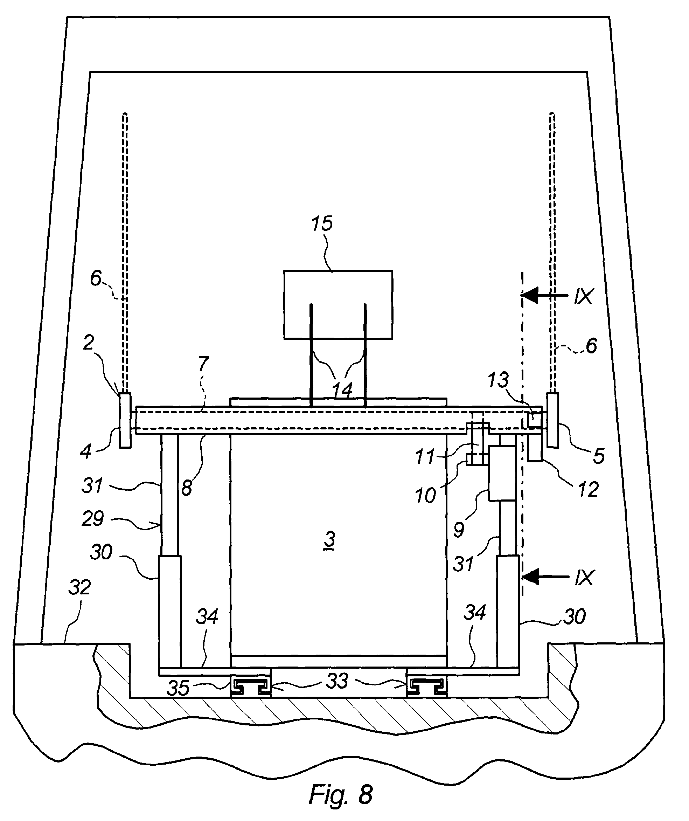

Bei der in den Fig. 7 und 8 dargestellten Ausführungsform ist der Querträger 8 mit der darin drehbar gelagerten Welle 7 über nach unten gerichtete Streben 29, die längenverstellbar ausgeführt sind und aus zwei teleskopartig ineinandergreifenden Rohren 30, 31 bestehen, an dem Fahrzeugchassis 32 befestigt. Die Befestigung erfolgt dabei über die Führungsschienen 33 des Fahrzeugsitzes 3, indem die nach unten gerichteten Streben 29 über Fußstücke 34 mit den beweglichen Teilen 35 der Führungschienen 33 verbunden sind. Die beweglichen Teile 35 tragen gleichzeitig den Fahrersitz 3, so daß die Sicherheitseinrichtung 2 gemeinsam mit dem Fahrersitz 3 verstellbar ist. Die ineinandergreifenden Rohre 30, 31 der nach unten gerichteten Streben 29 sind in ihren verschiedenen Längeneinstellungen durch nicht dargestellte Stifte oder auf andere Weise fixiert. Durch die Befestigung der Sicherheitseinrichtung 2 über die Führungsschienen 33 des Fahrzeugssitzes 3 kann die Motorhaube des Flurförderfahrzeugs 1 ungehindert geöffnet werden. Alternativ kann der Fahrersitz 3 zusammen mit der Sicherheitseinrichtung 2 aus seiner Führung geschoben werden, nachdem die Anschlüsse für die Steuerung abgezogen worden sind.

Die Welle 7 ist mit zwei nicht dargestellten Rillenkugellagern in dem Querträger 8 gelagert. Zusätzlich befinden sich auf der Welle 7 zwei ebenfalls in der Figur nicht dargestellte mechanische Endanschläge, die ca. 10 ° nach oben einstellbar sind. Dadurch wird verhindert, daß die Schutzbügel 4, 5 durch Krafteinwirkung aus der Sicherungsstellung gebracht werden können, und es ist eine ergonomische, für den Fahrer individuelle Einstellung möglich.

Die Schutzbügel 4, 5 bestehen aus gebogenen Rohren, die im vorderen Bereich 36 eine bauchige Ausformung aufweisen und gepolstert sind. Sie sind wiederum drehfest mit der Welle 7 verbunden. An dem Querträger 8 ist eine Kopfstütze 15 über verstellbare Stangen 14 angebracht.

Zum Antrieb der Welle 7 ist ein Elektromotor 9 vorgesehen, dessen Kraft über einen Riemenantrieb 11 auf die Welle 7 übertragen wird, der als Rutschkupplung dient und vor einem Einklemmen schützt. Der Elektromotor 9 ist an einer der nach unten gerichteten Streben 29 angebracht. Zur Steuerung der Sicherheitseinrichtung 2 sind zwei Endschalter 12, 13 vorgesehen, bei denen es sich um magnetische Näherungssensoren handelt. Als Steuerungssensor ist bei diesem Ausführungsbeispiel ein nicht dargestellter, an der Halterung für die Handbremse angebrachter weiterer magnetischer Näherungssensor vorgesehen. Es wäre jedoch auch jede andere der oben beschriebenen Arten von Steuerungssensoren denkbar.

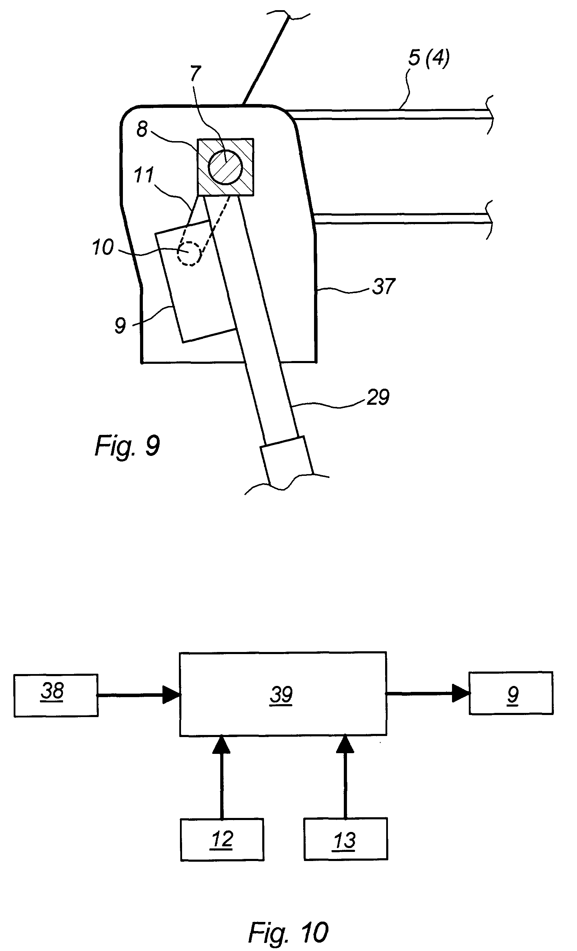

In dem in Fig. 9 dargestellten Schnitt entlang der Linie IX-IX der Fig. 8 erkennt man die Anordnung des Elektromotors 9 an der nach unten gerichteten Strebe 29. Auch der Riemenantrieb 11 von der Ausgangswelle 10 des Elektromotors 9 auf die Welle 7 ist deutlich zu erkennen. Die Antriebseinheit ist aus Sicherheitsgründen in einem, in den vorherigen Figuren aus Gründen der Übersichtlichkeit nicht dargestellten Schutzgehäuse 37 untergebracht. Die Form des Schutzgehäuses 37 ist dabei so gewählt, daß es zum einen die gesamte Antriebseinheit sicher umgibt, so daß ein Verletzungsrisiko für den Fahrer ausgeschlossen ist. Daneben bildet das Schutzgehäuse 37 durch die in Gig. 9 erkennbare besondere Formgestaltung eine Armlehne für den Fahrer, auf der sich dieser beim Rückwärtsfahren abstützen kann, um so trotz gedrehtem Oberkörper eine für ihn angenehme Sitzhaltung einnehmen zu können.

In der Fig. 10 ist eine schematische Skizze der Steuerung für die Sicherheitseinrichtung 2 dargestellt. Die Steuerung der Sicherheitseinrichtung 2 erfolgt über die bereits erwähnten drei magnetischen Näherungssensoren, nämlich den an der Halterung der Handbremse angebrachten Schalter 38 und die beiden Endschalter 12, 13. Eine Steuereinheit 39 überwacht die Signale der Schalter 12, 13, 38 und steuert in Abhängigkeit davon den Elektromotor 9. Die Steuerung erfolgt dabei in Abhängigkeit vom Betriebszustand des Flurföderfahrzeugs 1, wie dies schon weiter oben erläutert worden ist.

Bei gelöster Handbremse und damit geschlossenem Schalter 38 an der Halterung der Handbremse betätigt die Steuereinheit 39 den Elektromotor 9 solange und in die entsprechende Richtung bis der Endschalter 12 geschlossen wird, der das Erreichen der Sicherungsstellung der Schutzbügel 4, 5 signalisiert. Umgekehrt wird beim Anziehen der Handbremse der Schalter 38 geöffnet und dadurch der Elektromotor solange und in die entsprechende Richtung betätigt, bis der Endschalter 13 geschlossen ist, also die Schutzbügel 4, 5 in die Ruhestellung 6 verschwenkt wurden. Somit ist gewährleistet, daß die Schutzbügel sich im Fahrbetrieb, nämlich bei gelöster Handbremse, immer in Sicherungsstellung befinden und nach Beenden des Fahrbetriebs, nämlich beim Anziehen der Handbremse, automatisch in Ruhestellung verschwenkt werden.

Für das Verschwenken der Schutzbügel 4, 5 können unterschiedliche Geschwindigkeiten vorgesehen sein, d.h. die Schutzbügel 4, 5 können langsam von der Ruhestellung in die Sicherungsstellung verschwenkt werden, um die Gefahr des Einklemmens weiter zu verhindern, und schnell von der Sicherungsstellung in die Ruhestellung verschwenkt werden. Daneben können auch zeitliche Verzögerungen gegenüber der Änderung des Betriebszustands des Fahrzeugs beim Verschwenken der Schutzbügel vorgesehen werden.

Die Steuereinheit kann zusätzlich überwachen, ob die Schutzbügel 4, 5 auch wirklich ihre jeweilige Endlage erreichen, indem nach Verstreichen der für das Verschwenken erforderlichen Zeit überprüft wird, ob der jeweilige Endschalter 12, 13 auch wirklich geschlossen, also die jeweilige Endlage erreicht ist. Ist dies nicht der Fall kann die Steuereinheit ein Warnsignal erzeugen und/oder den Betrieb des Flurförderfahrzeugs 1 ganz unterbechen, indem beispielsweise die Stromzufuhr bei einem elektrisch betriebenen Fahrzeug unterbrochen wird. Damit ist zum einen eine Fehlfunktion der Sicherheitseinrichtung ausgeschlossen und darüber hinaus werden denkbare Manipulationen, wie etwa das Festbinden der Schutzbügel in der Ruhestellung oder das manuelle Anheben der Schutzbügel aus der Sicherungsstellung während der Fahrt, erkannt und das Flurförderfahrzeug 1 gegebenenfalls zum Stillstand gebracht.

Die einzelnen Bestandteile der Steuerung für die Sicherheitseinrichtung 2 sind bekannt und können für große Temperaturbereiche, beispielsweise von - 40 ° C bis + 80 ° C, ausgelegt sein, so daß auch ein Betrieb in Kühlhäusern möglich ist.

Die Erfindung ist nicht auf die in den Ausführungsbeispielen beschriebenen Flurförderfahrzeuge beschränkt, sondern kann bei allen Fahrzeugen zum Einsatz kommen, bei denen ein wirksamer und zuverlässiger Schutz des Fahrers bei seitlichem Umkippen erforderlich ist.

## Patentansprüche

1. Sicherheitseinrichtung für Fahrzeuge, insbesondere für Flurförderfahrzeuge, bei der an mindestens einer Seite neben dem Fahrersitz ein von einer Ruhestellung in eine Sicherungsstellung verschwenkbarer Schutzbügel angeordnet ist, der angetrieben, sensorengesteuert und im Fahrbetrieb automatisch in Sicherungsstellung verschwenkt ist, **dadurch gekennzeichnet, daß** der Schutzbügel (4, 5) um eine horizontal quer zur Fahrtrichtung verlaufende Achse (7) verschwenkbar ist, wobei der Schutzbügel (4, 5) in Ruhestellung (6) in etwa vertikal und in Sicherungsstellung in etwa horizontal steht, und daß nach Beendigung des Fahrbetriebs der Schutzbügel (4, 5) automatisch wieder in Ruhestellung (6) verschwenkt ist.

2. Sicherheitseinrichtung nach Anspruch 1, **dadurch gekennzeichnet, daß** an beiden Seiten neben dem Fahrersitz (3) verschwenkbare Schutzbügel (4, 5) angeordnet sind.

3. Sicherheitseinrichtung nach Anspruch 1 oder 2, **dadurch gekennzeichnet, daß** der Antrieb mittels eines Elektromotors (9) erfolgt.

4. Sicherheitseinrichtung nach Anspruch 1 oder 2, **dadurch gekennzeichnet, daß** der Antrieb mittels eines Hydraulikmotors (9) erfolgt.

5. Sicherheitseinrichtung nach einem der vorhergehenden Ansprüche, **dadurch gekennzeichnet, daß** zu Kraftübertragung ein Riemenantrieb (11) vorgesehen ist.

6. Sicherheitseinrichtung nach Anspruch 1 oder 2, **dadurch gekennzeichnet, daß** der Antrieb mittels eines Hydraulikzylinders (23) erfolgt.

7. Sicherheitseinrichtung nach Anspruch 1 oder 2, **dadurch gekennzeichnet, daß** der Antrieb mittels eines Pneumatikzylinders (23) erfolgt.

8. Sicherheitseinrichtung nach Anspruch 6 oder 7, **dadurch gekennzeichnet, daß** in den Zuleitungen des Zylinders ein Druckschalter vorgesehen ist.

9. Sicherheitseinrichtung nach Anspruch 1 oder 2, **dadurch gekennzeichnet, daß** der Antrieb mittels eines Elektro-Hub-Magneten erfolgt.

10. Sicherheitseinrichtung nach einem der vorhergehenden Ansprüche, **dadurch gekennzeichnet, daß** die Schwenkbewegung des Schutzbügels (4, 5) durch Endschalter (12, 13) begrenzt ist.

11. Sicherheitseinrichtung nach Anspruch 10, **dadurch gekennzeichnet, daß** als Endschalter (12, 13) magnetische Näherungssensoren vorgesehen sind.

12. Sicherheitseinrichtung nach Anspruch 10, **dadurch gekennzeichnet, daß** als Endschalter (12, 13) Tastschalter vorgesehen sind.

13. Sicherheitseinrichtung nach einem der vorhergehenden Ansprüche, **dadurch gekennzeichnet, daß** ein Steuerungssensor am Fahrtrichtungs-Wählhebel angebracht ist.

14. Sicherheitseinrichtung nach einem der vorhergehenden Ansprüche, **dadurch gekennzeichnet, daß** ein Steuerungssensor am Handbremsgestänge angebracht ist.

15. Sicherheitseinrichtung nach einem der vorhergehenden Ansprüche, **dadurch gekennzeichnet, daß** ein Steuerungssensor am Pedal-Wippen-Gestänge angebracht ist.

16. Sicherheitseinrichtung nach einem der vorhergehenden Ansprüche, **dadurch gekennzeichnet, daß** ein Steuerungssensor am Steuerungsjoystick angebracht ist.

17. Sicherheitseinrichtung nach einem der vorhergehenden Ansprüche, **dadurch gekennzeichnet, daß** ein Steuerungssensor am Fahrzeugtachometer angebracht ist.

18. Sicherheitseinrichtung nach einem der vorhergehenden Ansprüche, **dadurch gekennzeichnet, daß** ein Steuerungssensor an einem Fahrzeugrad angebracht ist.

19. Sicherheitseinrichtung nach einem der vorhergehenden Ansprüche, **dadurch gekennzeichnet, daß** ein Steuerungssensor am Fahrersitz angebracht ist.

20. Sicherheitseinrichtung nach einem der vorhergehenden Ansprüche, **dadurch gekennzeichnet, daß** die verschwenkbaren Schutzbügel (4, 5) an einem hinter dem Fahrersitz (3) verlaufenden Querträger (8) angeordnet sind.

21. Sicherheitseinrichtung nach Anspruch 20, **dadurch gekennzeichnet, daß** in dem Querträger (8) eine drehbar gelagerte, angetriebene und mit den Schutzbügeln (4, 5) starr verbundene Welle (7) verläuft.

22. Sicherheitseinrichtung nach Anspruch 20 oder 21, **dadurch gekennzeichnet, daß** an dem Querträger (8) eine Kopfstütze (15) befestigt ist.

23. Sicherheitseinrichtung nach einem der Ansprüche 20 bis 22, **dadurch gekennzeichnet, daß** der Querträger (8) aus ineinandergreifenden Profilen besteht und längenverstellbar ist.

24. Sicherheitseinrichtung nach einem der Ansprüche 20 bis 23, **dadurch gekennzeichnet, daß** der Querträger (8) über mindestens eine verstellbare Teleskopstange (16) an dem Fahrzeugdach (21) befestigt ist.

25. Sicherheitseinrichtung nach einem der Ansprüche 20 bis 24, **dadurch gekennzeichnet, daß** die Teleskopstangen (16) im Bereich der Befestigung an dem Fahrzeugdach (21) eine Schwenkachse (27) aufweisen.

26. Sicherheitseinrichtung nach Anspruch 25, **dadurch gekennzeichnet, daß** die Schwenkachse (27) quer zur Fahrtrichtung verläuft.

27. Sicherheitseinrichtung nach Anspruch 25, **dadurch gekennzeichnet, daß** die Schwenkachse (27) in Fahrtrichtung verläuft.

28. Sicherheitseinrichtung nach einem der Ansprüche 25 bis 27, **dadurch gekennzeichnet, daß** die Lage der Teleskopstangen (16) mit Sicherungsbolzen (vgl. 28) fixierbar ist.

29. Sicherheitseinrichtung nach einem der Ansprüche 20 bis 23, **dadurch gekennzeichnet, daß** der Querträger (8) mit nach unten gerichteten Streben (29) am Fahrzeugchassis (32) befestigt ist.

30. Sicherheitseinrichtung nach Anspruch 29, **dadurch gekennzeichnet, daß** die Befestigung am Fahrzeugchassis (32) über die Führungsschienen (33) des Fahrzeugsitzes (3) erfolgt, indem die nach unten gerichteten Streben (29) des Querträgers (8) mit den beweglichen Teilen (35) der Führungsschienen (33) verbunden sind, die gleichzeitig den Fahrzeugsitz (3) tragen.

31. Sicherheitseinrichtung nach einem der Ansprüche 29 oder 30, **dadurch gekennzeichnet, daß** die nach unten gerichteten Streben (29) in ihrer Länge verstellbar sind.

32. Sicherheitseinrichtung nach einem der vorhergehenden Ansprüche, **dadurch gekennzeichnet, daß** die Schutzbügel (4, 5) im vorderen Bereich (36) eine bauchige Ausformung aufweisen.

33. Sicherheitseinrichtung nach einem der vorhergehenden Ansprüche, **dadurch gekennzeichnet, daß** die Schutzbügel (4, 5) in ihrer Länge verstellbar sind.

34. Sicherheitseinrichtung nach einem der vorhergehenden Ansprüche, **dadurch gekennzeichnet, daß** die Schutzbügel (4, 5) in Sicherungsstellung in etwa in Höhe der Oberarme einer auf dem Fahrzeugsitz (3) sitzenden Person verlaufen.

35. Sicherheitseinrichtung nach einem der vorhergehenden Ansprüche, **dadurch gekennzeichnet, daß** die Schutzbügel (4, 5) gepolstert sind.

36. Sicherheitseinrichtung nach einem der vorhergehenden Ansprüche, **dadurch gekennzeichnet, daß** die Antriebseinheit (9, 11) in einem Schutzgehäuse (37) untergebracht ist, das die gesamte Antriebseinheit (9, 11) umgibt und eine Armlehne für den Fahrer bei zum Rückwärtsfahren gedrehtem Oberkörper bildet.
